# FASCICULE DE BREVET EUROPEEN

(11) **EP 2 297 599 B1**
(45) Date de publication et mention de la délivrance du brevet: **14.05.2014**
(21) Numéro de dépôt: 09779917.5
(22) Date de dépôt: 24.06.2009
(51) Int. Cl.: B01L 3/00, B01D 67/00, B01D 71/44, G02B 1/04, G02B 1/06, G02B 3/14

(54) **PROCÉDÉ AMÉLIORÉ DE RÉALISATION D'ENCEINTES REMPLIES DE LIQUIDE ET FERMÉES PAR UNE MEMBRANE**
VERBESSERTES VERFAHREN ZUR HERSTELLUNG VON MIT FLÜSSIGKEIT GEFÜLLTEN UND DURCH EINE MEMBRAN VERSIEGELTEN GEHÄUSEN
IMPROVED METHOD FOR MAKING ENCLOSURES FILLED WITH LIQUID AND SEALED BY A MEMBRANE

(30) Priorité: 27.06.2008 FR 0854335
(43) Date de publication de la demande: 23.03.2011
(73) Titulaire: COMMISSARIAT A L'ENERGIE ATOMIQUE ET AUX ENERGIES ALTERNATIVES, 75015 Paris (FR); Essilor International (Compagnie Générale d'Optique), 94220 Charenton-le-Pont (FR)
(72) Inventeur: CANO, Jean-Paul, F-94220 Charenton-le-pont (FR); SAUGEY, Anthony, F-94220 Charenton-le-pont (FR); CLERC, Laurence, F-38320 Brie et Angonnes (FR)
(74) Mandataire: Ilgart, Jean-Christophe
(86) Numéro de dépôt international: PCT/EP2009/057870
(87) Numéro de publication internationale: WO 2010/003821

(56) Documents cités:
- EP-A- 1 672 394
- CH-A5- 591 090
- JP-A- 2002 323 630
- US-A1- 2007 029 277

## Description

### DOMAINE TECHNIQUE

L'invention se rapporte à la réalisation de dispositifs comprenant une ou plusieurs cavités ou enceintes remplies d'un liquide et fermées au moins partiellement à l'aide d'une membrane.

Elle s'applique notamment au domaine de l'optique pour la réalisation de lentilles optiques ou de verres optiques, ou de matrices de verres ou de lentilles, à d'autres domaines tel que celui des MEMS ou NEMS (MEMS/NEMS pour micro ou nanosystèmes systèmes électromécaniques) pour réaliser des actionneurs, des capteurs, ou des interrupteurs, ainsi qu'à celui des dispositifs microfluidiques dans le domaine biomédical.

L'invention concerne plus particulièrement le procédé de fermeture de telles enceintes.

### ÉTAT DE LA TECHNIQUE ANTÉRIEURE

Pour certaines applications, notamment optiques, on peut chercher à encapsuler de façon étanche un liquide dit « liquide fonctionnel » dans des cavités ou des enceintes de dimension critique de l'ordre de plusieurs µm à plusieurs centaines de µm.

Ces micro-cavités peuvent être obtenues par diverses techniques, notamment par micro-usinage d'un substrat et par dépôt et structuration d'une ou plusieurs couches à l'aide de techniques de gravure et de photolithographie.

Par « liquide fonctionnel » on entend un liquide formé d'une ou plusieurs substances choisies pour leurs propriétés spécifiques, par exemple leurs propriétés optiques.

Le document EP 1 672 394 propose un procédé de réalisation d'une enceinte fermée et souple, remplie de liquide, en recouvrant d'une membrane élastique un volume de liquide déposé sur un substrat.

Dans ce procédé, la membrane élastique est formée directement sur le liquide par dépôt à basse pression d'un matériau élastique, le poly-para-xylylène, encore appelé communément Parylène®. Ce matériau polymérise à température ambiante pour former une couche uniforme épousant la surface sur laquelle il est déposé.

Du fait de la pression à laquelle un tel procédé de fermeture est réalisé, ce procédé a pour inconvénient majeur, que le liquide a tendance à s'évaporer lors de la formation de la membrane.

Une autre difficulté importante réside dans le fait qu'un mélange ou une réaction chimique du matériau déposé vis-à-vis du ou des liquides est susceptible de se produire.

Un but de l'invention est de proposer un procédé qui permette de fermer des cavités remplies d'un liquide de manière efficace et industrielle, et qui ne présente pas les inconvénients mentionnés ci-dessus.

### EXPOSÉ DE L'INVENTION

La présente invention concerne un procédé de réalisation d'un dispositif doté d'au moins une enceinte fermée remplie d'au moins un liquide et fermée à l'aide d'au moins une membrane, comprenant les étapes de :
a) dépôt sur un support d'au moins un matériau donné sous forme liquide,
b) solidification au moins partielle dudit matériau donné ou mise du matériau donné sous forme de gel,
c) réalisation de la membrane sur ledit matériau donné solidifié, la membrane et le support formant au moins une enceinte fermée remplie dudit matériau donné,
d) fusion dudit matériau donné, de manière à rendre à nouveau liquide ledit matériau donné dans l'enceinte fermée.

La membrane peut être formée par dépôt d'un matériau élastique.

Selon une possibilité de mise en oeuvre, le matériau élastique peut être à base de poly-para-xylylène et/ou de ses dérivés, cette famille de matériau étant connue sous le nom de Parylène®.

Le matériau utilisé pour former la membrane peut être déposé ou avoir à être déposé à basse pression. Par dépôt à « basse pression », on entend que le dépôt peut être effectué à une pression comprise entre 1 et 500 mTorr, ou entre 10 et 50 mTorr.

En déposant la membrane sur un matériau liquide solidifié ou sur gel, on évite notamment les problèmes d'évaporation du liquide.

Le dépôt de la membrane peut être effectué à une température comprise entre -196°C et 80°C, ou entre -30°C et 40°C.

Cette température peut être ajustée en fonction d'une part de la température en dessous de laquelle le matériau présent dans les cavités est susceptible de se gélifier ou de se solidifier partiellement ou totalement et d'une température au-dessus de laquelle le dispositif en cours de réalisation risquerait être détérioré.

Un dépôt de parylène à une température pour laquelle le matériau donné est maintenu à l'état solide, permet d'obtenir une vitesse de dépôt plus élevée que celle d'un dépôt tel que pratiqué dans l'art antérieur, sur un matériau liquide.

Le matériau donné peut être choisi parmi les matériaux suivants : cristal liquide par exemple tel que du pentyl cyanobiphenyl (5CB), un liquide ionique, par exemple tel qu'un sel imidazolium, pyrrolidinium, pyridinium, une huile minérale, par exemple une huile de la gamme Isopar® produite par Exxon Chemicals ou une huile employée dans l'encre d'imprimerie (de type jet d'encre ou de type dit « offset »), une huile silicone, un gel thermoréversible à base d'un liquide et d'un gélifiant par exemple de la famille des organo-gels.

L'étape de fusion ou de mise du matériau donné à nouveau à l'état liquide, peut être effectuée à température ambiante ou à une température comprise entre -20°C et 80°C.

Cette étape peut avoir lieu à une température de plusieurs °C à 10°C, supérieure à la température de fusion du matériau présent dans les cavités.

La température de fusion ou de mise du matériau donné à nouveau à l'état liquide est choisie de manière à ne pas dégrader l'ensemble du dispositif en cours de réalisation.

Selon une possibilité de mise en oeuvre, le support peut comporter plusieurs cavités séparées.

Dans ce cas, l'étape a) peut comporter le remplissage d'au moins une ou plusieurs desdites cavités à l'aide dudit matériau donné, la membrane formée à l'étape c) et les cavités formant plusieurs enceintes fermées séparées remplies dudit matériau donné.

Selon une autre possibilité, l'étape a) peut comporter le remplissage d'au moins une cavité à l'aide dudit matériau donné et le remplissage d'au moins une cavité à l'aide d'un autre matériau liquide donné, l'étape b) comportant en outre la solidification au moins partielle dudit autre matériau donné, la membrane formée à l'étape c) et les cavités formant plusieurs enceintes fermées remplies de liquides différents.

### BRÈVE DESCRIPTION DES DESSINS

D'autres caractéristiques et avantages de l'invention ressortiront plus clairement à la lecture de la description suivante et en référence aux dessins annexés, donnés à titre uniquement illustratif et nullement limitatifs.

Les figures 1A à 1H illustrent un exemple de procédé selon l'invention.

Les figures 2A et 2B illustrent des variantes de réalisation.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

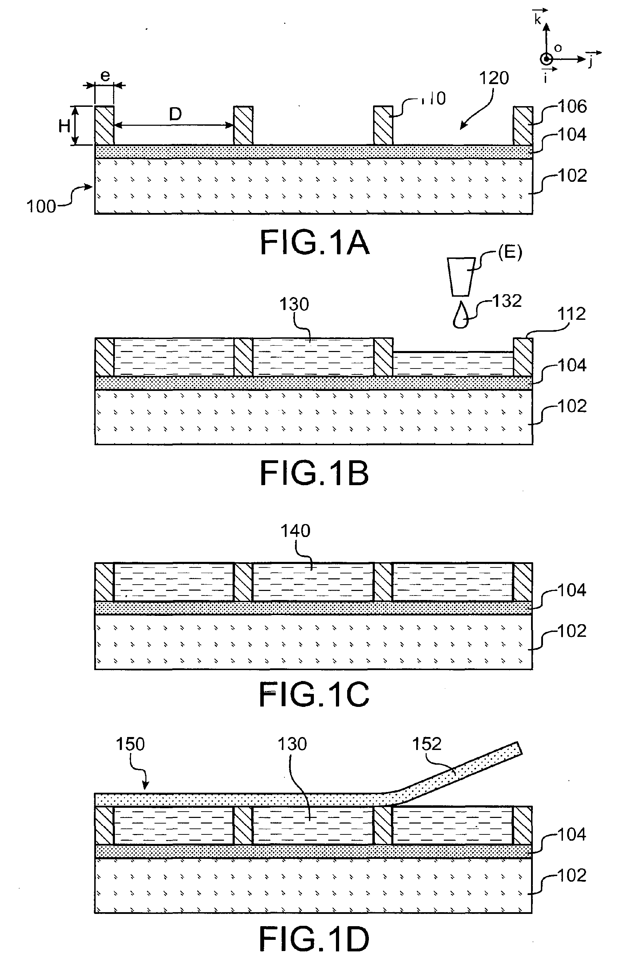

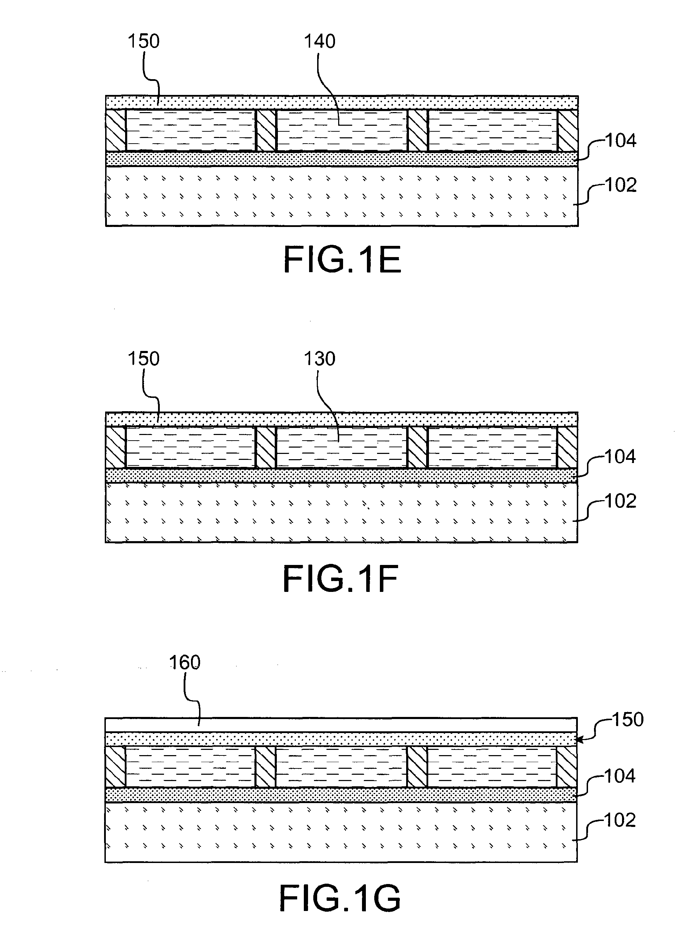

Un exemple de procédé, selon l'invention, de réalisation d'un dispositif comportant une ou plusieurs enceinte(s) remplies d'au moins un liquide, et fermée(s) à l'aide d'au moins une membrane, va à présent être donné en liaison avec les figures 1A-1H.

Sur un support plan 100, on forme tout d'abord une ou plusieurs cavités 120 ou cuves 120 ou enceintes 120, chaque cavité 120 étant délimitée latéralement, par des parois 110 formées dans une ou plusieurs couches minces, ainsi qu'au fond, par une couche du support. Les parois 110 des cavités 120 peuvent être réparties de manière à conférer à ces dernières une forme dans le plan du substrat qui peut être, selon plusieurs exemples : circulaire, ovale, carrée, rectangulaire, polygonale, ou en étoile. Les parois 110 séparant les cavités 120 assurent leur étanchéité mutuelle.

Le support 100 peut être transparent, et par exemple sous forme d'une dalle de verre ou d'une matière plastique telle qu'une couche de polyéthylène téréphtalate (PET).

Selon une possibilité (figure 1A), le support 100 peut être formé d'un substrat 102, par exemple en verre, sur lequel une ou plusieurs couches minces sont formées, par exemple au moins une couche 104 de matériau souple, à base de polyéthylène téréphtalate (PET). Une couche adhésive intermédiaire, par exemple à base d'acrylate peut être éventuellement prévue pour faire adhérer la couche 104 au substrat 102.

Les cavités 120 peuvent être réalisées, par dépôt d'une couche 106, sur le support 100, puis gravure de cette couche 106 de manière à délimiter les emplacements des parois 110. La couche 106 dans laquelle on définit les cavités 120 peut être, par exemple, une couche de résine photosensible. La réalisation des cavités 120 peut comprendre au moins une étape de photolithographie.

Selon une autre possibilité, les cavités 120 peuvent être formées à l'aide d'un procédé dans lequel on forme une couche 106 sur le support, puis on réalise les emplacements des cavités 120 par emboutissage, à l'aide d'un moule doté de motifs saillants que l'on applique par pressage sur la couche 106.

En variante, on peut déposer une couche 106 de matériau polymère sur le substrat 102 puis graver localement cette couche 106 au travers d'un masque, par exemple par gravure plasma RIE ou haute densité avec un mélange de O₂, avec un gaz fluoré type SF₆ et/ou CHF₃.

Selon une autre possibilité, on peut former la couche 106, par laminage sur un substrat 102 d'une couche de matériau polymère dans laquelle les cavités 120 ont été préalablement réalisées, par exemple par gravure.

La taille et la localisation des parois 110 dépendent de l'application prévue pour le dispositif. Pour une application optique, en particulier pour la réalisation de lentilles, les parois 110 peuvent être formées selon une géométrie prévue pour ne pas apporter de perturbation ou apporter des perturbations négligeables ou non visibles, sur le trajet de rayons lumineux traversant le support 100. Les parois 110 peuvent être formées à base d'une résine transparente et dans laquelle des motifs peuvent être réalisés par photolithographie, par exemple une résine à base d'ORMOCER®, par exemple telle que décrite dans le document : « ORMOCER® for Optical Interconnection Technology », R. Buestrich, F. Kahlenberg, M. Popall et al., Journal of Sol-Gel Science and Technology 20, 181-186, 2001.

Les parois 110 séparant les cavités 120 peuvent avoir une épaisseur e définie dans une direction parallèle au plan principal du substrat ou support (définie sur la figure 1A dans un plan parallèle au plan [O;*̅i̅*̅;*̅j̅*̅] d'un repère orthogonal [O*;i̅*;*̅j̅*̅;*̅k̅*̅] défini sur la figure 1A) comprise par exemple entre 0,1 µm et 5 µm, ou entre 1 et 3 µm.

Les parois 110 peuvent également avoir une hauteur H (H étant définie sur la figure 1A dans une direction parallèle au vecteur *̅k̅*̅ du repère orthogonal [O;*̅i̅*̅;*̅j̅*̅;*̅k̅*̅]) comprise par exemple entre 5 et 50 µm, ou entre 10 et 30 µm.

Les cavités 120 peuvent également avoir un diamètre ou un côté ou une longueur D (définie dans une direction parallèle au plan [O;*̅i̅*̅;*̅j̅*̅] du repère orthogonal [O;*̅i̅*̅;*̅j̅*̅;*̅k̅*̅]) comprise par exemple entre 5 µm et 500 µm ou entre 50 µm et 300 µm.

Ensuite, (figure 1B), on effectue un remplissage des cavités 120 à l'aide d'un matériau donné liquide ou de plusieurs liquides donnés. Dans le cas d'une application à un dispositif optique le matériau donné peut être un liquide dit « liquide fonctionnel », c'est à dire choisi pour des propriétés spécifiques, par exemple tel que l'indice de réfraction, la capacité d'absorption lumineuse, la polarisation, la réponse à des stimuli électriques ou lumineux.

Le matériau donné liquide peut être par exemple du 1-Butyl-3-méthylimidazolium acétate apte à être d'être solidifié à une température de l'ordre de -20°C.

Selon un autre exemple, le matériau donné peut être une huile de paraffine de type Nujol® de la société Plough apte à être solidifiée à une température de l'ordre de -40°C.

Selon encore un autre exemple, le matériau donné peut être un mélange de 2,3-Bis-n-decyloxyanthracene (DDOA) dans du 1-octanol, susceptible d'être gélifié ou mis sous forme de gel à une température comprise entre 20 et 40°C.

Par gel, on entend un corps provenant de la solidification de substances colloïdales ou bien un réseau continu solide enveloppant une phase liquide continue.

Le remplissage peut être réalisé par un équipement E visant l'intérieur des cavités 120 et projetant le matériau 130 liquide sous forme d'un jet ou de gouttes 132, d'un volume qui peut être de l'ordre de plusieurs picolitres. Le liquide peut être délivré à l'aide d'une technique adaptée à la localisation de faible volume, soit plusieurs picolitres à centaines de picolitres. Pour le remplissage des cavités, l'équipement E utilisé peut mettre en oeuvre une technique de dispense de liquide semblable à celle de la dispense par jet d'encre. Le matériau 130 liquide peut remplir les cavités partiellement ou complètement. Un remplissage total des cavités peut être effectué de manière à atteindre le sommet 112 des parois 110 ou à dépasser légèrement le sommet 112 des parois 110.

Selon une possibilité de mise en oeuvre, une ou plusieurs cavités 120 peuvent être remplies par un mélange de plusieurs liquides dans des proportions ajustées selon l'application visée. Par exemple, pour une application optique, l'apport de deux à plusieurs liquides comportant des colorants différents peut permettre d'ajuster la densité optique ou l'absorbance dans une cavité en adaptant les volumes de chacun des liquides de remplissage.

Selon un exemple d'application du dispositif, celui-ci peut être prévu pour délivrer au moins un principe actif. Dans ce cas, le remplissage des cavités peut être effectué à l'aide d'un liquide comportant des molécules actives et un solvant. La concentration ou le dosage des molécules actives peut différer selon les cavités 120. Une gradation de concentration en principe actif entre les cavités du dispositif peut être ainsi prévue. Le principe actif peut être une substance qui entre dans la composition d'un médicament et qui est responsable des propriétés pharmacodynamiques ou thérapeutiques de celui-ci.

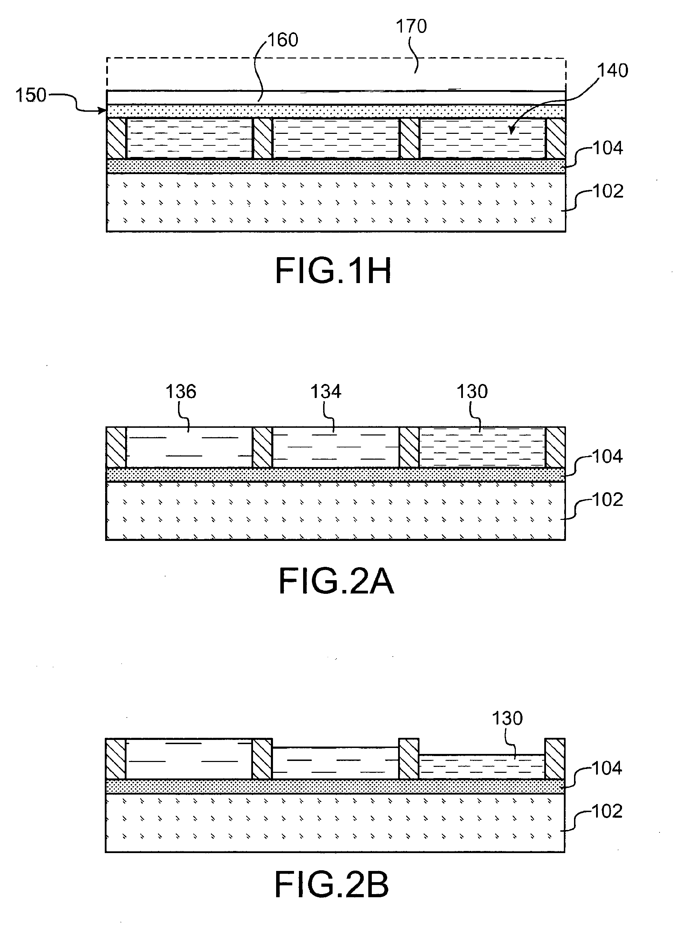

Selon une autre possibilité de mise en oeuvre (figure 2A), plusieurs cavités 120 peuvent être également remplies par des liquides 130, 134, 136 différents d'une cavité à l'autre. Cela peut être mis en oeuvre notamment pour une application optique du dispositif, lorsque l'on cherche à conférer aux cavités des propriétés optiques différentes entre elles.

Selon une autre possibilité de mise en oeuvre (figure 2B), un volume de liquide différent d'une cavité à l'autre peut être prévu.

Le matériau liquide 130 peut comporter un ou des solvants organiques. Selon un exemple, le solvant utilisé peut être de l'éther de glycol Dowanol TPM (tri-propylène glycol methyl éther).

Ensuite, on effectue une solidification (figure 1C) du matériau ou des matériaux 130 liquides présent(s) dans les cavités 120.

La solidification peut être partielle de sorte qu'au moins la partie supérieure du matériau 130 liquide ou des liquides présents dans les cavités est mise à l'état de solide, ou totale.

Pour solidifier le matériau 130 liquide ou les liquides présents dans les cavités 120, on réalise un refroidissement du ou des liquides. Pour cela, on peut porter le liquide à une température au moins inférieure ou égale à celle à laquelle on atteint la pression saturante du matériau 130 liquide présent dans les cavités 120 ou, lorsque plusieurs liquides sont présents, à celle à laquelle on atteint la plus petite valeur de pression saturante des liquides présents dans les cavités 120.

Dans un cas, par exemple, où le matériau 130 liquide remplissant les cavités est du 1-Butyl-3-méthylimidazolium acétate, le liquide peut être porté à une température inférieure à -20°C pour effectuer cette solidification.

Dans un autre cas, par exemple, où le matériau 130 solidifié est une huile minérale de type lubrifiant, le liquide peut être porté à une température inférieure à -40°C pour effectuer cette solidification.

Selon une variante, l'étape de solidification peut être remplacée par une étape de mise sous forme de gel du matériau donné de remplissage. Dans ce cas, le matériau donné de remplissage des cavités est un matériau apte à être mis sous forme de gel ou formé d'un mélange comportant un composant gélifiant. Un exemple de mélange peut être formé du 2,3-Bis-n-decyloxyanthracene (DDOA) dans du 1-octanol. Par exemple, pour une application au relarguage d'un principe actif dans un organisme biologique, l'apparition du gel peut avoir lieu, selon le mélange précité utilisé, entre 20 et 40°C. Un dépôt ultérieur d'une membrane de fermeture des cavités pourra ainsi être réalisé à la température ambiante. Dans ce cas, un retour à l'état liquide du gel de remplissage des cavités 120 pourra être effectué à une température au-dessus de cette température de 40°C.

Selon une possibilité, l'étape de refroidissement peut être effectuée dans une chambre de dépôt dans laquelle on prévoit de réaliser ultérieurement une couche de fermeture sous forme d'une membrane, qui peut être élastique ou flexible.

Dans ce cas, un système de refroidissement du dispositif est prévu dans la chambre de dépôt. Un tel système peut comprendre, par exemple, un module à platine et à effet Peltier ou un porte échantillon avec un système de circulation d'azote liquide.

Une technique de refroidissement arrière du support 100 à l'aide d'hélium ou d'un gaz caloporteur peut être également mise en oeuvre.

Un refroidissement peut également être apporté par une enceinte à circulation de fluide caloporteur, la chambre de dépôt étant mise sous pression d'un gaz neutre vis-à-vis du liquide 130.

Un système de pompage sous vide peut être également prévu dans la chambre de dépôt afin d'éviter des phénomènes de condensation.

Le support 100 peut être placé à température ambiante dans la chambre de dépôt, un gaz neutre vis-à-vis du liquide et sec étant tout d'abord introduit à une pression qui est proche de l'ambiante. Pour effectuer la solidification, un refroidissement est ensuite opéré de manière à atteindre la solidification souhaitée, qui peut être partielle ou surfacique, ou totale.

Pour cela, la chambre de dépôt peut être mise à une température de l'ordre de -20°C ou de -30°C. Une température située dans une telle gamme permet de solidifier des liquides ioniques standards tels que par exemple, 1-Butyl-3-méthylimidazolium acétate, 1-Butyl-3-méthylimidazolium méthylsulfate ou 1-Butyl-3-méthylimidazolium thiocyanate. Ces valeurs de température sont données à titre indicatif, la température de la chambre ou du porte substrat étant adaptée au liquide présent dans les cavités afin de le rendre partiellement ou totalement solidifié.

A l'issue de cette étape de solidification, le matériau donné situé dans les cavités est sous forme d'un solide 140 ou est solide en surface.

Ensuite, (figures 1D et 1E) on effectue le dépôt d'une couche 150 de fermeture, sur le sommet 112 des parois 110 et sur la surface du matériau donné solidifié 140 ou mis sous forme de gel. La couche 150 de fermeture est prévue sous la forme d'une membrane souple qui peut être à base d'un matériau élastique et permet de former des cavités fermées ou des enceintes fermées remplies de liquides. Cette couche de fermeture ou membrane peut permettre d'assurer l'étanchéité des cavités. La membrane est prévue notamment pour réaliser une barrière à l'humidité, aux acides et aux solvants et éventuellement une couche électriquement isolante.

Le matériau 152 de la couche de fermeture 150 peut être du poly-para-xylylène également connu sous le nom de Parylène®. Un tel matériau polymérise à température ambiante, et peut être formé de façon conforme, de manière à épouser la forme de la surface sur laquelle il est déposé.

L'épaisseur du matériau déposé peut être uniforme, et comprise, selon les applications, entre plusieurs nanomètres et plusieurs micromètres, par exemple entre une centaine de nanomètres et plusieurs dizaines de microns, par exemple entre 0,2 µm et 5 µm.

Le dépôt de parylène en vue d'une fermeture présente comme intérêt, celui de permettre d'obtenir un film continu, conforme, de faible épaisseur, incolore et transparent, ainsi que de bonnes propriétés de protection, le parylène étant imperméable, résistant aux environnements agressifs, aux solvants et aux gaz.

Le dépôt peut être effectué en phase gazeuse, par exemple à l'aide d'un dépôt CVD (CVD pour Chemical Vapour Deposition).

Le dépôt du matériau 152 de la couche 150 de fermeture peut être réalisé sous une pression comprise entre 1 et 500 mbar, ou sous vide primaire. A une telle pression les liquides de remplissage ont habituellement tendance à s'évaporer. Dans le cas présent, le ou les liquides 130 remplissant les cavités 120 ayant été au moins partiellement solidifiés ou mis sous forme de gel, les phénomènes d'évaporation n'apparaissent pas.

La formation de la couche de parylène peut être faite dans des conditions standard, une pyrolyse à 680°C du di-para-xylylène est préalablement effectuée, puis une polymérisation du monomère de para-xylylène à la surface de l'échantillon est effectuée à une température permettant de maintenir le matériau donné à l'état de solide. Lorsque le matériau donné solidifié est par exemple du Butyl-3-méthylimidazolium acétate, 1-Butyl-3-méthylimidazolium méthylsulfate ou 1-Butyl-3-méthylimidazolium thiocyanate, le dépôt peut être effectué à une température comprise entre -30°C et -20°C, lorsque le matériau donné solidifié peut être maintenu à l'état solide.

Une fois la température des pièces devant recevoir le dépôt de parylène atteinte, le vide peut être réalisé dans la chambre de dépôt.

Puis, une fois le dépôt de parylène réalisé et la membrane ainsi formée, on augmente à nouveau la température de la chambre de dépôt, de manière à ramener le matériau solidifié 140 à l'état liquide 130. La température autour du dispositif peut être ramenée par exemple à température ambiante. Une fois la fusion du matériau 130 réalisée, des cavités 120 fermées remplies de liquide sont formées. Un dispositif comportant plusieurs enceintes liquides fermées chacune en partie par une membrane de matériau élastique et par les parois 110 d'un support 100 a ainsi été réalisée.

Une ou plusieurs couches supplémentaires 160 peuvent être formées par-dessus la couche 150 de fermeture (figure 1H). Une ou plusieurs couches supplémentaires 160 peuvent être réalisées. Pour réaliser une (de) telle(s) couche(s) supplémentaire(s), on peut effectuer, un dépôt ou un report par exemple par laminage. La couche supplémentaire peut être un film de matériau élastique qui peut être par exemple identique à la couche 104, par exemple à base de PET.

La couche 160 peut être ensuite recouverte d'une ou plusieurs couches fonctionnelles (schématisées par un bloc référencé 170) par exemple ayant des propriétés antireflet, ou de vernis dur ou antisalissure ou antiabrasion ou antichocs.

Le substrat 102 peut être quant à lui être conservé ou selon une variante, séparé de la couche 104 de matériau souple.

Selon une possibilité, pour certaines applications, par exemple pour la réalisation de lentilles optiques individuelles, une séparation entre elles des cavités 120 fermées peut être effectuée. Les enceintes fermées remplies de liquide sont ainsi dissociées ou individualisées.

Une telle séparation peut être faite par exemple par laser, ou à l'aide d'ultrasons ou à l'aide d'au moins un outil tranchant.

Le procédé qui vient d'être donné peut être adapté au dépôt d'autres matériaux que le parylène par exemple un matériau transparent, tel que le Poly(1,3,5-trivinyltrimethylcyclotrisiloxane (dénommé poly(V3D3)), qui peut être déposé par iCVD (iCVD pour « initiated CVD »), tel que cela est décrit dans l'article Biomacromolecules, 2007, 8, 2564-2570. La température de dépôt peut être de l'ordre de 35°C pour une pression de dépôt comprise entre 350 et 450 mTorr. Une telle pression et une telle température, peuvent éventuellement permettre d'utiliser une gamme importante de liquides possibles pour le matériau donné de remplissage des cavités 120.

Le Poly(1,3,5)trivinyltrimethylcyclotrisiloxane (dénommé poly(V3D3)) peut être déposé à une pression et une température auxquelles on peut maintenir le matériau donné 130 initialement sous forme liquide, sous forme solidifié et apte à retrouver un état liquide à pression et température ambiante.

Le procédé suivant l'invention peut être utilisé pour la réalisation de lentilles optiques, ou de matrices de lentilles. Dans ce cas, ladite couche de fermeture peut être une couche de parylène formée de la manière décrite précédemment, par dépôt sur un matériau que l'on a préalablement solidifié ou mis sous forme de gel, puis rendu à l'état liquide après dépôt de manière à former ledit liquide de ladite enceinte.

## Revendications

1. Procédé de réalisation d'un dispositif doté d'au moins une enceinte fermée remplie d'au moins un liquide et fermée à l'aide d'au moins une membrane, comprenant les étapes de :
a) dépôt sur un support (100) d'au moins un matériau donné sous forme liquide,
b) solidification au moins partielle dudit matériau donné (130),
c) réalisation, par dépôt à basse pression sur ledit matériau solidifié, d'une membrane, la membrane et le support formant au moins une enceinte fermée remplie dudit matériau donné,
d) fusion dudit matériau donné (130), de manière à rendre à nouveau liquide ledit matériau donné dans l'enceinte fermée.

2. Procédé selon la revendication 1, dans lequel ledit matériau formant la membrane, est un matériau élastique.

3. Procédé selon la revendication 1 ou 2, dans lequel ledit matériau formant la membrane, est à base de poly-para-xylylène et/ou d'au moins un de ses dérivés.

4. Procédé selon l'une des revendications 1 à 3, dans lequel le dépôt est effectué à une pression comprise entre 1 et 500 mTorr ou à un vide industriel.

5. Procédé selon l'une des revendications 1 à 4, dans lequel le dépôt est effectué à température comprise entre -196°C et 80°C.

6. Procédé selon l'une des revendications 1 à 5, dans lequel le support comporte plusieurs cavités séparées et dans lequel l'étape a) comporte le remplissage d'au moins une cavité à l'aide dudit matériau donné (130), la membrane formée à l'étape c) et les cavités, formant plusieurs enceintes fermées séparées remplies dudit matériau donné.

7. Procédé selon l'une des revendications 1 à 5, dans lequel le support comporte plusieurs cavités séparées et dans lequel l'étape a) comporte le remplissage d'au moins une cavité à l'aide dudit matériau donné et le remplissage d'au moins une cavité à l'aide d'un autre matériau liquide donné, l'étape b) comportant en outre la solidification au moins partielle dudit autre matériau donné (130, 230), la membrane formée à l'étape c) et les cavités, formant plusieurs enceintes fermées remplies de liquides différents.

8. Procédé selon l'une des revendications 1 à 7, ledit matériau donné étant choisi parmi l'un des matériaux suivants : cristal liquide, liquide ionique, huile minérale, huile encre d'imprimerie, huile silicone, gel thermoréversible à base d'un liquide et d'un gélifiant.

## Patentansprüche

1. Verfahren zur Herstellung einer Vorrichtung, welche zumindest ein geschlossenes Gehäuse aufweist, welches mit mindestens einer Flüssigkeit gefüllt ist und mit Hilfe mindestens einer Membran verschlossen ist, wobei das Verfahren die folgenden Schritte umfasst:
a) Aufbringung von mindestens einem in flüssiger Form vorliegenden bestimmten Materials auf einen Träger (100);
b) zumindest teilweise Erstarrung des bestimmten Materials (130);
c) Realisierung einer Membran durch Niederdruck-Abscheidung auf das besagte erstarrte Material, wobei die Membran und der Träger zumindest ein mit dem bestimmten Material gefülltes geschlossenes Gehäuse bilden;
d) Schmelzen des bestimmten Materials (130), so dass das bestimmte Material in dem geschlossenen Gehäuse erneut flüssig wird.

2. Verfahren nach Anspruch 1, in welchem das die Membran bildende besagte Material ein elastisches Material ist.

3. Verfahren nach Anspruch 1 oder 2, in welchem das die Membran bildende Material auf der Basis von Poly-Para-Xylylen und/oder zumindest eines seiner Derivate ist.

4. Verfahren nach einem der Ansprüche 1 bis 3, in welchem die Abscheidung bei einem Druck zwischen 1 und 500 mTorr oder bei industriellem Vakuum erfolgt.

5. Verfahren nach einem der Ansprüche 1 bis 4, in welchem die Abscheidung bei einer Temperatur zwischen -196°C und 80°C erfolgt.

6. Verfahren nach einem der Ansprüche 1 bis 5, in welchem der Träger mehrere getrennte Hohlräume aufweist und in welchem der Schritt a) die Füllung zumindest eines Hohlraums mit Hilfe des bestimmten Materials (130) aufweist, wobei die bei Schritt c) gebildete Membran und die Hohlräume mehrere geschlossene getrennte Gehäuse bilden, welche mit dem bestimmten Material gefüllt sind.

7. Verfahren nach einem der Ansprüche 1 bis 5, in welchem der Träger mehrere getrennte Hohlräume aufweist und in welchem der Schritt a) die Füllung zumindest eines Hohlraums mit Hilfe des bestimmten Materials sowie die Füllung zumindest eines Hohlraums mit Hilfe eines anderen bestimmten flüssigen Materials aufweist, wobei der Schritt b) darüber hinaus die zumindest teilweise Erstarrung dieses anderen bestimmten Materials (130, 230) aufweist, wobei die bei Schritt c) gebildete Membran und die Hohlräume mehrere geschlossene Gehäuse bilden, welche mit unterschiedlichen Flüssigkeiten gefüllt sind.

8. Verfahren nach einem der Ansprüche 1 bis 7, wobei das bestimmte Material aus einem der folgenden Materialien ausgewählt wird: Flüssigkristall, ionische Flüssigkeit, Mineralöl, ÖI-Druckertinte, Silikonöl, thermoreversibles Gel auf der Basis einer Flüssigkeit und eines Geliermittels.

## Claims

1. A method for making a device provided with at least one closed enclosure filled with at least one liquid and closed with at least one membrane, comprising the steps of:
a) depositing on a support (100) at least one given material in liquid form,
b) at least partly solidifying said given material (130),
c) making a membrane by low pressure deposition onto said solidified material, the membrane and the support forming at least one closed enclosure filled with said given material,
d) melting said given material (130), so as to again liquefy said given material in the closed enclosure.

2. The method according to claim 1, wherein said material forming the membrane is an elastic material.

3. The method according to claim 1 or 2, wherein said material forming the membrane is based on poly-para-xylylene and/or on at least one of its derivatives.

4. The method according to any of claims 1 to 3, wherein the deposition is carried out at a pressure between 1 and 500 mTorrs or in an industrial vacuum.

5. The method according to any of claims 1 to 4, wherein the deposition is carried out at a temperature comprised between -196°C and 80°C.

6. The method according to any of claims 1 to 5, wherein the support includes several separate cavities and wherein step a) includes the filling of at least one cavity with said given material (130), the membrane formed in step c) and the cavities forming several separate closed enclosures filled with said given material.

7. The method according to any of claims 1 to 5, wherein the support includes several separate cavities and wherein step a) includes the filling of at least one cavity with said given material and the filling of at least one cavity with another given liquid material, step b) further including the at least partial solidification of said given material (130, 230), the membrane formed in step c) and the cavities forming several closed enclosures filled with different liquids.

8. The method according to any of claims 1 to 7, said given material being selected from one of the following materials: a liquid crystal, an ionic liquid, a mineral oil, a printing ink oil, a silicone oil, a thermoreversible gel based on a liquid and a gelling agent.
